# EUROPEAN PATENT SPECIFICATION

(11) **EP 4 532 798 B1**
(45) Date of publication and mention of the grant of the patent: **31.12.2025**
(21) Application number: 23731976.9
(22) Date of filing: 02.06.2023
(51) Int. Cl.: C25B 1/04, C25B 1/26, C25B 1/55, C25B 9/15, C25B 15/08, C25B 9/50

(54) **ELECTROLYSIS REACTOR**
ELEKTROLYSEREAKTOR
RÉACTEUR D'ÉLECTROLYSE

(30) Priority: 03.06.2022 EP 22177270
(43) Date of publication of application: 09.04.2025
(73) Proprietor: Universiteit Antwerpen, 2000 Antwerpen (BE)
(72) Inventor: BORAH, Rituraj, 2020 Antwerpen (BE); ALAGARSAMY GANESHKUMAR, Karthick Raj, 2020 Antwerpen (BE); VERBRUGGEN, Sammy, 2020 Antwerpen (BE)
(74) Representative: De Clercq & Partners
(86) International application number: PCT/EP2023/064783
(87) International publication number: WO 2023/232988

(56) References cited:
- EP-A1- 0 565 330
- WO-A1-2022/106874
- US-A1- 2016 340 789
- US-A1- 2017 081 770
- SAMIR DE BISWAJIT ET AL: "Hydrogen generation and utilization in a two-phase flow membraneless microfluidic electrolyzer-fuel cell tandem operation for micropower application", APPLIED ENERGY, ELSEVIER SCIENCE PUBLISHERS, GB, vol. 305, 11 October 2021 (2021-10-11), XP086855227, ISSN: 0306-2619, [retrieved on 20211011], DOI: 10.1016/J.APENERGY.2021.117945

## Description

### Field of the invention

The present invention is situated in the field of devices for carrying out electrochemical reactions, such as the electrolysis of water or another fluid, particularly electrochemical reactions that generate a gaseous reaction product from the water or fluid. In particular, the present invention relates to electrolysis reactors, more particularly membraneless electrolysis reactors and to the corresponding methods for performing electrochemical reactions using said electrolysis reactor.

### Background of the invention

Water electrolysis for splitting water into hydrogen and oxygen gas is the most mature technology for producing fully carbon-neutral 'green hydrogen', especially if the required electricity is derived from a renewable source, such as wind or solar. This is commonly executed in compartmentalized electrolysers, where the hydrogen and oxygen evolution reactions are physically separated in two distinct compartments with a cathode and an anode respectively, separated by a membrane or diaphragm, with different reaction conditions that need to be maintained within each compartment. The major advantage over one-pot reactions, is that the reaction products generated at the anode and the cathode are readily and separately available, thus avoiding energy- and cost-demanding post-separation steps. The membrane or diaphragm separating the cathodic and anodic compartments allows ionic currents (e.g. Na⁺, H⁺, OH⁻) between the cathode and anode, completing the electrical circuit for continuous electrolysis.

The main drawbacks of the membrane/diaphragm electrolysers can be attributed to the presence of the membrane/diaphragm. Membrane fouling or diaphragm pore-blockage by even minute impurities in the water negatively affects the performance of the electrolyser leading to eventual failure. As the membranes are expensive and have a limited lifetime, operating or upscaling a conventional electrolyser comprising a membrane or diaphragm has high capital and operating costs.

Membraneless electrolysers are known in the art. In this type of electrolysers, the oxidation and reduction reactions take place in a single compartment. One of the main challenges is thus to prevent the intermixing of the reaction products, particularly of the gaseous reaction products. On the one hand, increasing the electrode-to-electrode distance promotes the separation of the reaction product, particularly in the form of gas bubbles, but leads to increased ohmic losses and thus a lower power efficiency. On the other hand, a small electrode-to-electrode distance minimizes the ohmic losses, but results in more product mixing and a higher pressure drop, which in its turn demands more pumping power to pump the water or fluid through the electrolyser. Also, longer electrodes typically generate larger gas bubbles, which are more prone to intermixing. Membraneless electrolysers also generally do not work with a disturbed flow, such as a turbulent flow or a pulsatile flow.

EP 0 565 330 discloses a process and an electrolytic cell for the production of fluorine, wherein a fluorine containing electrolyte is passed in a non-turbulent flow between an anode and a cathode of the electrolytic cell.

US 2016/340789 discloses a photoelectrolysis system, including at least one photoelectrochemical (PEC) cell having at least one photoanode and one photocathode. An electrolyte flow apparatus moves the electrolyte over surfaces of one or both of the photoanode and the photocathode at a flow rate that is based on one or more characteristics of the photoelectrolysis.

There is thus a need in the art for improved membraneless-type electrolysers, particularly for membraneless-type electrolysers suitable for operating in an industrial setting with high gas production rate, high gas purity, and at high current densities, i.e. current densities typically exceeding 250 mA:cm².

### Summary of the invention

The inventors have developed an improved electrolyser, which is a membraneless electrolysis reactor, wherein the reaction products are separated by flow-induced division of the oxidation and reduction products in combination with the presence of a perforated divider or mesh located between the electrodes. Advantageously, highly pure reaction products, such as hydrogen, oxygen or chlorine gas with a purity exceeding 99%, can be obtained in a simple manner at high production rates and hight current densities, with little if any additional energy required for the post-electrolysis product separation. In contrast to the semi-permeable nature of traditional membranes, the perforated divider or mesh, such as comprising a plurality of openings, allows for an unrestricted ion transport between the electrodes, required for the electrochemical reaction. In addition, as the openings of the perforated divider are larger, such as at least 1 order of magnitude larger, than traditional membranes in electrolysis reactors, there is a much more limited risk of blockage of the openings or fouling of the membrane. The perforated divider used in the present invention also has a more extended lifetime and is less expensive, also more easily allowing upscaling. Importantly, the perforated divider or mesh prevents that gas bubbles formed at one electrode migrate to the other electrode, and vice versa. This is particularly the case for the larger bubbles generated at the electrodes, as they are less affected by the flow-induced separation, and are more prone to migrate to the other product stream.

The flow induced separation of the reaction products, particularly gaseous reaction products, is further promoted by the dimensions of the electrolysis reactor, in particular by the ratio of the width of flow channel reactor to the width of the distal flow channel(s).

Advantageously, due to the efficient screening and separation of the gaseous product streams generated at the different electrodes, the length of the electrodes along the flow channel reactor can be increased: coalescence of bubbles generated at the upstream end of the liquid flow results in larger gas bubbles, which will remain in their respective product stream, thus increasing the production capacity of the electrolysis reactor.

The different features of the electrolysis reactor as envisaged herein, including but not limited to the use of a perforated divider or mesh as envisaged herein, also allows the electrolysis reactor to operate at flow velocities corresponding to a lower Reynolds number, and thus requiring a lower pumping power. The use of a divider or mesh with a plurality of openings in an electrolysis reactor which is a membraneless electrolysis reactor and its powerful effect on product separation and product purity is applicable to a wide variety of reactor designs, and is not affected by the width of the reactor channel, the distance between the electrodes, or the position of the distal flow channels. For instance, it may be applied in all electrolysis reactors with reactor designs wherein the flow channels and the flow channel reactor have a Y-, X- or T-shape, or wherein the flow channels and the flow channel reactor are positioned in line with each other. The perforated divider or mesh also enhances the tolerance of the membraneless electrolysis reactor to flow disturbances or pulsed flow.

The improved (membraneless) reactor as envisaged herein further exhibits a low pressure drop in the flow channel, which helps to reduce the pumping power and thus further contributes to the process efficiency.

Advantageously, the electrolysis reactor envisaged herein has a fully 3D printable design, and is easily scalable. Furthermore, the optional integration of an optical window configured to illuminate the electrodes allows the use of photoactive electrodes for completely light driven operation in absence of other power sources.

A first aspect of the present application provides an electrolysis reactor, which is a membraneless electrolysis reactor, wherein the electrolyte flow and an elongated divider or mesh comprising a plurality of openings together ensures nearly complete separation of the gas formed at opposing electrodes. More particularly, the application provides an electrolysis reactor comprising:
(a) a flow channel reactor comprising an inlet and outlet, wherein a longitudinal axis of the flow channel reactor connects the flow channel reactor inlet and outlet,
(b) a first electrode and a second electrode positioned inside the flow channel reactor and extending longitudinally along opposite sides of the flow channel reactor towards the flow channel reactor outlet;
(c) a first distal flow channel with a first distal flow channel inlet and outlet and a second distal flow channel with a second distal flow channel inlet and outlet, wherein the inlets of the first and second distal flow channel are directly connected to the outlet of the flow channel reactor, and wherein preferably the ratio of the width D of the flow channel reactor to the width d1 and/or d2 of the first and/or second distal flow channel ranges from 0.5 to 1, and
(d) an elongated divider or mesh comprising a plurality of openings, particularly with a size of at least 1 µm located in the flow channel reactor, positioned between and parallel to the first and second electrode. In particular embodiments, the plurality of openings have a size between 1 µm and 3000 µm or more particularly a size between 10 µm and 100 µm.

In particular embodiments, the ratio of the width D of the flow channel reactor or the distance D between the first and second electrode to the width d1 and/or d2 of the first and/or second distal flow channel ranges from 0.5 to 0.8. This range was found to be particularly effective in minimizing the pressure drop over the electrolysis reactor of the invention, while ensuring a flow that is strong enough for flow-induced bubble separation in the flow channel reactor.

In particular embodiments, the first and second distal flow channels each extend from said flow channel reactor outlet in different directions at an angle θ to the longitudinal axis of the flow channel reactor, wherein the angle θ ranges from 90° to 175°, preferably ranges from 100° to 170°, more preferably ranges from 120° to 150°. These angles were found to be particularly effective in minimizing the pressure drop over the electrolysis reactor of the invention, while ensuring a flow that is strong enough for flow-induced bubble separation in the flow channel reactor. In other embodiments, the angle θ between a distal flow channel and the longitudinal axis of the flow channel reactor is about 175° to 180°, particularly is 180°.

In particular embodiments, the width D of the flow channel reactor ranges between 1.0 mm and 100 mm, particularly ranges between 2.0 mm and 50 mm or between 2.0 mm and 8.0 mm. A broader flow channel reactor allows the formation of larger gas bubbles, which are retained in their respective product stream by the perforated divider or mesh. Stated differently, the perforated divider or mesh enables the device to tolerate the formation of bubbles of a size upto or similar to the channel width without crossover of the product bubbles to the other side. As already indicated above, in the absence of the perforated divider or mesh, large bubbles can easily cross over to the other side, regardless of the flow regime, resulting in unwanted product intermixing. A smaller flow channel minimizes ohmic losses.

In particular embodiments, the first and second distal flow channel are connected to the flow channel reactor by way of a common distal flow channel inlet, and the elongated divider or mesh extends into the common distal flow channel inlet, or the elongated porous divider or mesh is connected to a non-perforated divider which extends into the common distal flow channel inlet.

In certain embodiments, the first and/or the second electrode include a catalyst, particularly a photocatalyst.

In certain embodiments, the electrolysis reactor of the invention further comprises one or more proximate flow channels connected to the inlet of the flow channel reactor. This may further reduce the pressure drop over the electrolysis reactor and may further promote product separation.

In certain embodiments, the flow channel reactor comprises a side wall with a transparent and/or an opaque portion, configured for allowing a light source to illuminate the first and/or the second electrode.

A further related aspect of the present application provides an electrolysis system comprising at least one electrolysis reactor according to the present application, as discussed elsewhere herein, particularly a plurality of the electrolysis reactor according to the present application. In particular embodiments, the electrolysis system further comprises a first product collector connected to the outlet of the first distal flow channel and/or a second product collector connected to the outlet of the second distal flow channel, particularly wherein the first and/or second product collector comprises a gas-liquid separator.

Another, related aspect of the present application relates to a method of electrochemically producing at least one product comprising the steps of:
(i) providing an electrolysis reactor comprising a flow channel reactor; a first electrode and a second electrode positioned inside the flow channel reactor and extending longitudinally along opposite sides of the flow channel reactor, a first distal flow channel and a second distal flow channel directly connected to the outlet of the flow channel reactor, wherein preferably the ratio of the width D of the flow channel reactor to the width d1 and/or d2 of the first and/or second distal flow channel ranges from 0.5 to 1, and an elongated divider or mesh comprising a plurality of openings, particularly with size of at least 1 µm, positioned in the flow channel reactor between and parallel to the first and second electrode;
(ii) flowing a stream of a liquid, particularly an electrolyte or a liquid comprising a reactant, through the flow channel reactor, under laminar flow conditions, in contact with the first and the second electrode;
(iii) applying a voltage across the first and second electrode and/or applying irradiation to the first and second electrode, thereby generating an oxidation reaction product at the first electrode and a reduction reaction product at the second electrode, particularly wherein the porous divider or mesh and the laminar flow confine the oxidation reaction product and the reduction reaction product to opposing sides of the flow channel reactor; and
(iv) allowing a first effluent stream comprising the oxidation reaction product to exit from the flow channel reactor via the first distal flow channel and allowing a second effluent stream comprising the reduction reaction product to exit from the flow channel reactor via the second outlet.

In particular embodiments, the oxidation reaction product is a gas, particularly oxygen or chlorine gas and/or the reduction product is a gas, particularly hydrogen gas.

In certain embodiments, the method further comprises the step of separating the oxidation reaction product and/or the reduction reaction product from the first and/or the second effluent stream, respectively, and, optionally, recycling the effluent stream devoid of the reaction product to the flow channel reactor.

Another related aspect relates to the use of the electrolysis reactor according to the present application or the use of the electrolysis system according to the present application, for the electrolysis of water, aqueous electrolyte solutions, sea water or brine solutions, for the (photo)electrolysis of aqueous solutions containing organic molecules, such as for instance based on organic waste, biomass or its derived components (e.g. glycerol), for performing other electrochemical reactions, or for performing a photoelectrochemical reaction.

### Description of the Figures

FIG. 1A represents an embodiment of a membraneless electrolysis reactor as envisaged herein.
FIG. 1B represents an embodiment of a membraneless electrolysis reactor as envisaged herein, wherein the ratio D/d1 is less than 1.
FIG. 2 represents an embodiment of a membraneless electrolysis reactor as envisaged herein.
FIG. 3 represents an embodiment of a membraneless electrolysis reactor as envisaged herein.
FIG. 4 shows the computational fluid dynamics in the electrolyser channels with varying D/d ratio (D/d1 or D/d2 ratio), focused on the junction of the flow channel reactor and the distal flow channels, for three different Reynolds numbers (Re), i.e. *Re* = 10; *Re* = 100 and *Re* = 500, with angle θ = 135°. The flow direction is upward from the bottom through the flow channel reactor, separating into to two streams in the distal flow channels. FIG 4A: D/d ratio = 0.75; FIG 4B: D/d ratio = 1; FIG 4C: D/d ratio = 2.
FIG. 5 shows the relation between the pressure coefficient, which is indicative of the pressure loss in the system, and angle θ for different D/d ratio, for *Re* = 10 on the left Y-axis and for *Re* = 500 on the right Y-axis.
FIG. 6 indicates the electrolyte flow experiments with red and blue dyes for D/d = 0.75 (FIG 6A) and D/d = 2 (FIG 6B, at Reynolds number of about 500, and shows a close up of the area in the electrolysis reactor at the outlet of the flow channel reactor and the inlets of the distal flow channels.
FIG. 7 indicates the bubble trajectory in a membraneless electrolyser without a mesh (left), in a membraneless electrolyser with 3D printed integrated mesh (mid) and in a membraneless electrolyser with metal mesh (right). The dotted line indicates the location of the electrodes.
FIG. 8 represents a front, back and side view of a CAD model of an embodiment of a membraneless electrolysis reactor as envisaged herein.
FIG. 9 represents a top and side view of a gas separation chamber.
FIG. 10 represents an embodiment of a 3D printed mesh with pore size of 1000 µm.
FIG. 11 shows the real time gas composition at the outlet of the hydrogen distal flow channel (11A) and at the outlet of the oxygen distal flow channel (11B), as determined via mass spectrometry.

### Detailed description of invention

Before the present system and method of the invention are described, it is noted that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or openended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention. The term "liquid" is used generally herein and can refer to both the liquid or electrolyte introduced into the system (prior to the electrolysis reaction), i.e. the liquid of the matter stream, and the liquid obtained during/after the electrolysis reaction, and present in an effluent stream.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

It is to be understood that other embodiments may be utilised and structural or logical changes may be made without departing from the scope of the present invention. The following detailed description, therefore, is not to be taken in a limiting sense, and the scope of the present invention is defined by the appended claims.

The inventors have developed an improved electrolysis reactor, which is a membraneless electrolysis reactor, i.e. an electrolysis reactor without an ion exchange membrane, particularly without an ion exchange membrane located between the cathode and anode of the device, and a related a method of electrochemically producing at least one product, which addresses one or more of the drawbacks of the prior art.

In its more generic form, the electrolysis reactor according to the present application comprises a flow channel reactor or flow-through channel reactor comprising a first and a second electrode, wherein an elongated divider is positioned between the first and second electrode, or anode and cathode, wherein the elongated divider is configured to allow for unrestricted ion and water transport between the electrodes, and is configured to minimize or prevent the intermixing of the oxidation and reduction reaction products, particularly when in gaseous form, generated by the first and second electrode. In particular embodiments, the divider is positioned such that it divides the reactor in two compartments, one comprising the first electrode and one comprising the second electrode. In the improved electrolysis reactor according to the present application, the use of the elongated divider as envisaged herein preferably combined with one or more of a specific design of the outlet flow channels and the flow channel reactor, in particular the ratio of the width D of the flow channel reactor to the width d of a distal flow channel, as defined further herein, an optimal absolute width D of the flow channel and/or an optimal mesh size. These features each contribute to the gas bubble separation and fluid dynamics within the system, and also influence the pressure losses during operation.

In the electrolysis reactor of the present application, the separation of the products, particularly in gaseous form, generated at the electrodes is based on the combination of (A) a fluid dynamics approach for controlling the position and trajectory of the smaller gas bubbles, in particular by creating a flow field and velocity gradient in the liquid stream, under laminar flow conditions, within the flow channel reactor, with (B) the presence of an elongated divider or mesh between the electrodes in the flow channel reactor, such as a perforated elongated divider or mesh as further discussed herein, which prevents the crossover and intermixing of both the small and the larger bubbles. Advantageously, the design of the electrolysis reactor of the present application may be adapted to minimize the pressure losses during operation, thus increasing the process efficiency. Furthermore, in the electrolysis reactor as envisaged herein, the oxidation and reduction reaction products, particularly the gaseous oxidation and reduction reaction products, are collected at dedicated outlets of the device, particularly via separate distal flow channels.

A first aspect of the present invention thus provides an electrolysis reactor, more particularly a membraneless electrolysis reactor comprising (a) a flow channel reactor; (b) a first electrode and a second electrode positioned inside the flow channel reactor; (c) a first distal flow channel with a first distal flow channel inlet and outlet and a second distal flow channel with a second distal flow channel inlet and outlet, wherein the inlets of the first and second distal flow channel are directly connected to the outlet of the flow channel reactor, and (d) an elongated divider or mesh comprising a plurality of openings, positioned between and parallel to the first and second electrode. Preferably, the ratio of the width D of the flow channel reactor to the width d1 and/or d2 of the first and/or second distal flow channel ranges from 0.5 to 1.

The elongated divider or mesh as envisaged herein is a perforated divider or mesh comprising a plurality of openings or through-holes, wherein the dimensions of the openings or through-holes are adapted to allow the ionic currents to flow unrestricted between the first and second electrode, and to prevent the passage of the reaction products, particularly gaseous reaction products. The terms "perforated divider" or "divider having a plurality of openings" as used herein is in the meaning that said divider is not a membrane or diaphragm as understood by the skilled person and as used in conventional electrolysers. In particular, a membrane, such as an ion exchange membrane, used in prior art electrolysis applications is defined as a solid matrix that typically consists of distinct, nanoscale pores - with nanoscale generally defined as having dimensions up to 100 nm. For instance, as recommended by International Union of Pure and Applied Chemists (IUPAC), mesoporous membranes have pore sizes, i.e. pore diameters, between 2 nm and 50 nm, microporous membranes have pore sizes between 0.2 nm and 2 nm, and nonporous membranes have pore diameters below 0.2 nm. In contrast, the perforated divider or mesh of the present invention is a structure with microscale or even macroscale openings - with microscale generally relating to dimensions between 100 nm and 100 µm and macroscale defined as dimensions greater than about 100 µm. Particularly, the lower limit of the dimensions of the plurality of openings of the perforated divider is about 1 µm. In particular embodiments, the size or diameter of the plurality of openings of the elongated perforated divider or mesh is between 1 µm and 3000 µm. In certain embodiments, the size or diameter of the plurality of openings in the perforated divider or mesh is between 10 µm and 3000 µm or between 50 µm and 3000 µm. In certain embodiments, the size or diameter of the plurality of openings in the perforated divider or mesh is between 100 µm and 2000 µm or between 500 µm and 1500 µm. In certain embodiments, the size or diameter of the plurality of openings in the perforated divider or mesh is between 5 µm and 250 µm, such as between 10 µm and 200 µm or between 10 µm and 100 µm. The elongated perforated divider may also comprise multiple horizontal or vertical wires, separated by a distance of at least 1 µm, such as separated by a distance between 1 µm and 3000 µm, between 50 µm and 3000 µm, between 100 µm and 2000 µm or between 500 µm and 1500 µm; or between 5 µm and 250 µm, between 10 µm and 200 µm or between 10 µm and 100 µm. A divider having a plurality of openings with these dimensions does not restrict ion and water transport between the electrodes, which is required for the electrochemical process to take place, and is particularly effective in preventing the mixing of the oxidation and reduction reaction products, particularly when in gaseous form, generated at the first and second electrode, thus allowing the recovery of highly pure reaction products. At the same time, this mesh pore size will prevent a significant increase in the ohmic resistance through the mesh.

The flow channel reactor or flow-through channel reactor is configured for containing and directing a matter stream, i.e. a stream of a liquid, in particular an electrolyte or a liquid comprising a reactant, and for defining a flow path for the matter stream in the electrolysis reactor, so that the matter stream is contacted with the first and second electrode, thereby generating an oxidation reaction product and reduction reaction product in said liquid stream during operation. The flow channel reactor is preferably an enclosed channel, and comprises an inlet and an outlet, wherein the longitudinal axis of the flow channel reactor connects the reactor inlet and reactor outlet. Typically, the width D of the flow channel corresponds to the interelectrode distance. In certain embodiments, the width D of the flow channel reactor ranges between 1 mm and 100 mm, particularly ranges between 2 mm and 50 mm or between 3 mm and 30 mm. Advantageously, the presence of the elongated perforated divider and its strong effect on the separation of the gaseous oxidation and/or reduction product streams allows the use of wider channels and larger electrodes, and, thus, the generation of larger bubbles, while maintaining a very high purity of the respective product streams. In certain embodiments, the width D of the flow channel reactor or the interelectrode distance ranges between 2.0 mm and 8.0 mm, particularly between 2.5 mm and 5.0 mm. Advantageously, this width/distance D exhibits low ohmic losses and further avoids intermixing of the gaseous reaction products.

In certain embodiments, the flow channel reactor comprises a side wall with a transparent and/or an opaque portion, configured for allowing a light source to illuminate the first and/or the second electrode. In this embodiment, the first and/or second electrode is a photoactive electrode, comprising a photocatalyst. This allows the use of the electrolysis reactor as envisaged herein for photoelectrolysis or photochemical applications.

The first and second electrode are positioned inside the flow channel reactor and extend longitudinally along opposite sides of the flow channel reactor outlet. Typically, the first electrode is an anode and, when the electrolysis reactor of the present application is in operation, produces an oxidation reaction product, particularly in gaseous form, inside the flow channel reactor from a component in the liquid or electrolyte. Similarly, the second electrode is a cathode and, when the electrolysis reactor of the present application is in operation, produces a reduction reaction product, particularly in gaseous form, inside the flow channel reactor from a component in the liquid or electrolyte. In particular, the first and second electrode are positioned in or at opposite side walls of the flow channel reactor. In other words, the inter-electrode distance is similar or identical to the width D of the flow channel reactor.

The electrode dimensions are not particularly limiting. In certain embodiments, the electrodes have an electrode surface area of several hundreds or thousands cm². In certain embodiments, the electrodes have an electrode surface area of at least 50 cm², at least 100 cm², at least 200 cm², at least 500 cm² or even at least 1000 cm².

In particular embodiments, the electrodes are configured for the evolution of oxygen, chlorine and/or hydrogen.

Typical materials for use as anode materials are known in the art and include platinum, boron-doped diamond, coated titanium (coated with oxides of metals, e.g. iridium oxide, mixed iridium/ruthenium oxide and tin oxide). Similarly, a wide range of suitable materials for the cathode materials is readily apparent to a person skilled in the art. For instance, stainless steel is particularly suitable.

In certain embodiments, the first and/or second electrode may contain a catalyst, in particular a photocatalyst.

In certain embodiments, the electrodes, or the electrodes and part of the channel reactor wall attached to the electrode, are removably attached in the flow channel reactor. This way, the electrodes are easily detachable from the electrolysis reactor, which facilitates fabrication (e.g. by coating the electrode material on a flat plate), maintenance and replacement of the electrodes.

The first and second distal flow channels are preferably enclosed channels, each having a distal flow channel inlet and outlet. The first and second distal flow channels are directly connected to the outlet of the flow channel reactor via the inlets of the first and second distal flow channel. When in operation, the first distal flow channel transports the oxidation reaction product generated at the first electrode or anode out of the flow channel reactor, and the second distal flow channel transports the reduction reaction product generated at the second electrode or cathode out of the flow channel reactor. In particular, it will be understood to the skilled person that the first and second distal flow channels transport a first and second effluent stream, respectively, with the first effluent stream comprising the oxidation reaction product in a liquid and the second effluent stream comprising the reduction reaction product in a liquid. Each distal flow channel has a width d, with the first and second distal flow channels having a width d1 and d2, respectively. In preferred embodiments, the width d1 of the first distal flow channel is about equal to the width d2 of the second distal flow channel, wherein the width of the first and second distal flow channel may be indicated by distance d. The width d is typically determined perpendicular to the flow in the distal flow channel, or stated differently, perpendicular to the walls enclosing the distal flow channel. Similarly, each distal flow channel has a cross-sectional area "a" which is a function of d.

In certain embodiments, the ratio of the width D of the flow channel reactor to the width d of a distal flow channel, or to the width d1 and/or d2 of the first and/or second distal flow channel, ranges from 0.2 to 2. In certain preferred embodiments, the ratio of the width D of the flow channel reactor to the width d of a distal flow channel, or to the width d1 and/or d2 of the first and/or second distal flow channel, is lower than 1, particularly ranges f from 0.5 to 1. More preferably, the ratio of the width D of the flow channel reactor to the width d of a distal flow channel, or to the width d1 and/or d2 of the first and/or second distal flow channel, ranges from 0.5 to 0.9, from 0.6 to 0.9, from 0.5 to 0.8, or from 0.7 to 0.8. Stated differently, the ratio of the cross-sectional area A of the flow channel reactor to the cross-sectional area "a" of the distal flow channel is lower than 1 and ranges between 0.5 and 1. A thus dimensioned electrolysis reactor was found to have a particularly low pressure drop over the electrolysis reactor, while maintaining a strong flow field in the flow channel reactor, thus minimizing the required pumping power. The thus dimensioned electrolysis reactor also promotes the separation of the different gaseous reaction products, particularly at high production rates. More in particular, the width d of the distal flow channel determines the shape and strength of the flow fields in the electrolysis reactor, particularly at the junction of the Y-shaped channel and the outlet of the flow channel reactor, i.e. the zones where the risk of product mixing is the highest, particularly at high production rates, or stated differently, at current densities exceeding 250 mA/cm². In this context, the broader distal flow channels are able to accommodate a large volume of gaseous bubbles, such as a large number of bubbles or larger bubbles. It has further been observed that the broader distal flow channels comprise a zone wherein the fluid has a low velocity, which acts as a buffer zone to accommodate the larger bubble streams, that are generated at higher current densities/production rates.

In certain embodiments, the first and second distal flow channels each extend from said flow channel reactor outlet in different directions at an angle θ to the longitudinal axis of the flow channel reactor. This setup facilitates collection of the individual oxidation and reduction reaction products. In particular embodiments, the angle θ ranges from 90° to 175°, preferably ranges from 100° to 170°. More preferably, the angle θ ranges from 120° to 150°; these angles provide a smooth liquid flow and flow separation in the flow channel reactor and the distal flow channels, without a strong wake formation. This contributes to a low pressure drop over the electrolysis reactor and a lowering of the required pumping power.

In certain embodiments, the first and second distal flow channels each extend from said flow channel reactor outlet essentially positioned in line with the flow channel reactor. Stated differently, the angle between the distal flow channel(s) and the longitudinal axis of the flow channel reactor ranges from 175° to 180°, particularly is about 180°. Advantageously, this design takes up a minimal amount of space and is easily stackable side by side. It is also simple to manufacture, for instance, only requiring coating the electrodes onto a flat plate.

In particular embodiments, the first and second distal flow channel are connected to the flow channel reactor by way of a common distal flow channel inlet, and the elongated perforated divider or mesh extends into the common distal flow channel inlet. Alternatively, the first and second distal flow channel are connected to the flow channel reactor by way of a common distal flow channel inlet and the elongated perforated divider or mesh is connected to a non-perforated divider which extends into the common distal flow channel inlet.

In particular embodiments, the electrolysis reactor of the invention may comprise one or more proximate flow channels, such as a first and a second proximate flow channel, connected to the inlet of the flow channel reactor for providing one or more matter streams, i.e. a stream of a liquid, in particular an electrolyte or a liquid comprising a reactant, to the flow channel reactor. In particular, the one or more proximate flow channels each comprise an inlet and an outlet, and the outlet of each proximate flow channel is directly connected to the inlet of the flow channel reactor. The width of the proximate flow channels may be the same or different as the width of the distal flow channels. Likewise, the angle between the proximate flow channels and the longitudinal axis of the flow channel reactor may be the same or different than angle θ. In certain embodiments the proximate flow channels may be positioned in line with the flow channel reactor.

Advantageously, the electrolysis reactor according to the present application can be produced with a 3D printer.

The present application further provides an electrolysis system comprising at least one (membraneless) electrolysis reactor as described herein, particularly comprising a plurality or an array or stack of the (membraneless) electrolysis reactor as described herein.

In certain embodiments, the electrolysis system further comprises a first product collector connected to the outlet of the first distal flow channel and/or a second product collector connected to the outlet of the second distal flow channel. In particular, the first and/or second product collector comprises a gas-liquid separator for separating the gaseous reaction product or gaseous reaction products from the liquid. Suitable gas-liquid separators are known by the skilled person.

In certain embodiments, the electrolysis system further comprises a pumping means for providing a liquid or electrolyte to (and/or removing it from) the flow channel reactor. More in particular, the pumping means is configured for providing or generating a flow of a liquid or electrolyte into the flow channel reactor under laminar flow conditions. This way, a parabolic hyperbolic flow profile is created across the flow channel reactor. As understood by the person skilled in the art, laminar flow in a pipe or channel generally goes hand in hand with a Reynolds number below 2000. The Reynolds number *Re* is a dimensionless number which, in certain embodiments, is defined as (D x U x *ρ*)/*µ*, wherein D is the flow channel width, U is the average (inlet) velocity, *ρ* is the liquid density and *µ* is the viscosity of the fluid.

In certain embodiments, the pumping means is configured to provide or generate a laminar flow with a Reynolds number lower than 1500 or lower than 1000. More in particular, the pumping means is configured to provide or generate a laminar flow with a Reynolds number between 1 and 1000 or between 1 and 500, even more in particular with a Reynolds number between 1 and 250, between 1 and 200, or between 1 and 100. Advantageously, these low Reynolds values correspond to a low flow speed, and thus only require a limited pumping power. A lower flow speed increases the contact time between the electrodes and the liquid or electrolyte. In addition, despite the weak flow field at these low Reynolds number values, an electrolysis reactor according to the present application allows to obtain highly pure reaction products, due to the presence of the elongated perforated divider or mesh and the specific design of the electrolysis reactor, which prevents the reaction products from crossing over or intermixing.

The pumping means may be connected to the flow channel reactor inlet or the inlet of the one or more proximate flow channels, and/or to the outlet of the distal flow channels, via tubing or similar suitable connecting means. It is understood that the pumping power of the pump can be increased or decreased to vary the velocity of the liquid or electrolyte in the electrolyser reactor.

In some embodiments, the electrolysis system further comprises a liquid or electrolyte reservoir, in fluid connection to the pumping system.

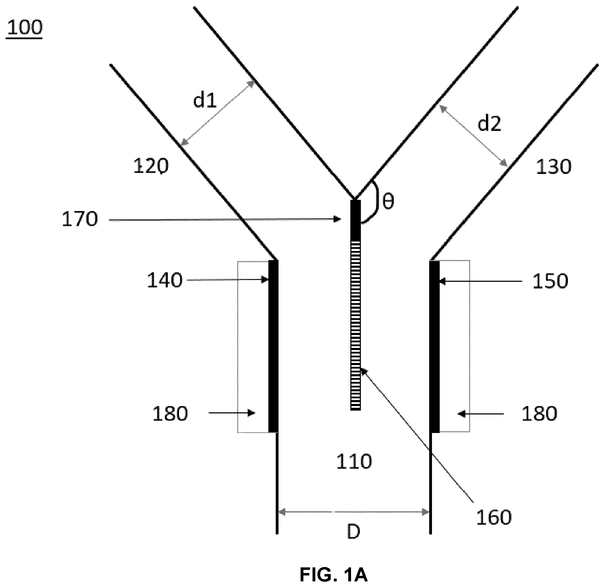

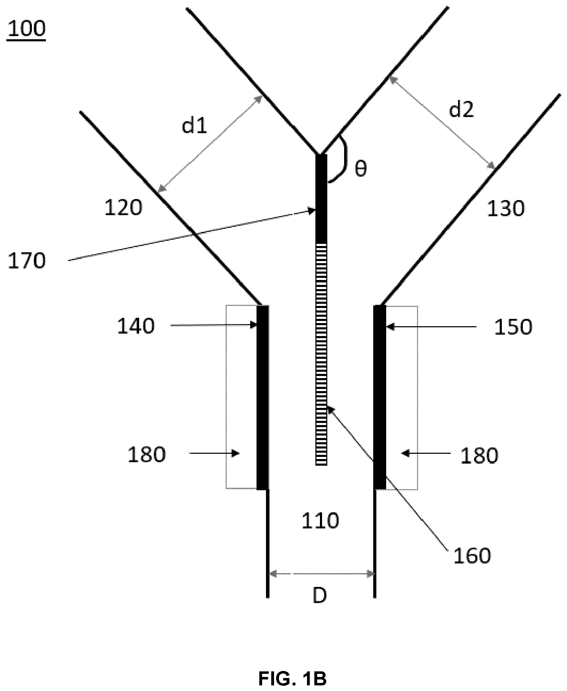

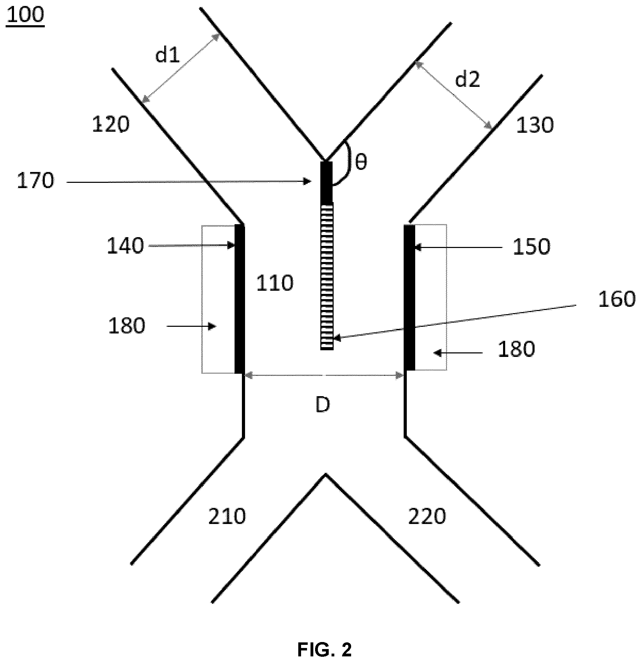

Referring to FIG. 1A and 1B, and FIG. 2, these drawings represent different embodiments of an electrolysis reactor according to the present application, which is a membraneless electrolysis reactor, in particular a so-called Y-shaped and a so-called X-shaped membraneless electrolysis reactor, respectively. In these embodiments, the electrolysis reactor (100) comprises a flow channel reactor (110) with width D, for containing and directing a stream of an electrolyte or a liquid comprising a reactant. A first electrode or anode (140) and a second electrode or cathode (150) are positioned inside the flow channel reactor (110), with each electrode extending longitudinally along opposite sides of the flow channel reactor (110) parallel with the longitudinal axis of the flow channel reactor (110). The outlet of the flow channel reactor (110) is directly connected to a first distal flow channel (120) with width d1 and a second distal flow channel (130) with width d2, for removing the oxidation reaction product and the reduction reaction product generated by the first and second electrode (140, 150) respectively, from the flow channel reactor (110). FIG. 1B represents an embodiment of the electrolysis reactor according to the present invention, wherein the ratio D/d (i.e. D/d1 or D/d2 for the first and second distal flow channel, respectively) is less than 1. The flow channel reactor (110) does not comprise a membrane between the electrodes, but further comprises an elongated perforated divider or a mesh (160) positioned between and parallel to the first and second electrode (140, 150). The perforated divider or mesh (160) may be connected to a non-perforated divider (170), which in its turn extend the common inlet or the inlets of the first and second distal flow channel (120, 130). Alternatively, the perforated divider or mesh (160) may extend to the common inlet or the inlets of the first and second distal flow channel (120, 130). The first and second distal flow channels (120, 130) each extend from said flow channel reactor in different directions at an angle θ to the longitudinal axis of the flow channel reactor (110). A T-shaped membraneless electrolysis reactor is obtained for angle θ equal to 90°. The flow channel reactor (110) may further comprise a side wall with a transparent and/or opaque portion, for allowing a light source to illuminate the first and/or the second electrode. As shown in FIG. 2, a first and a second proximate flow channel (210, 220) may be connected to the inlet of the flow channel reactor (110) for providing two liquid or electrolyte streams to the flow channel reactor. This design may further reduce the pressure drop over the membraneless electrolysis reactor and may further increase the gaseous product separation efficiency. The width of the proximate flow channels (210, 220) may be the same or different as the width of the distal flow channels. Likewise, the angle between the proximate flow channel (210, 220) and the longitudinal axis of the flow channel reactor may be the same or different than angle θ.

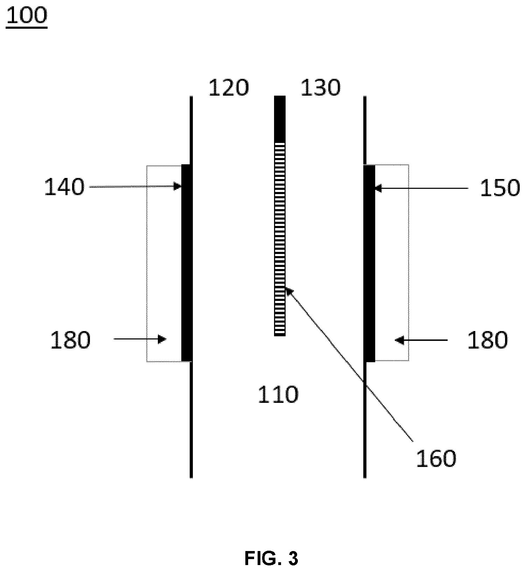

Referring to FIG. 3, representing an embodiment of an electrolysis according to the present application, and similar as in FIG. 1 and FIG. 2, the electrolysis reactor (100) comprises a flow channel reactor (110) for containing and directing a stream of an electrolyte or a liquid comprising a reactant. A first electrode or anode (140) and a second electrode or cathode (150) are positioned inside the flow channel reactor (110), with each electrode extending longitudinally along opposite sides of the flow channel reactor (110) parallel with the longitudinal axis of the flow channel reactor (110). Each electrode may have a surface area of upto several hundreds of cm², such as having a size of 10cm x 10cm or 15cm x 15 cm. The outlet of the flow channel reactor (110) is directly connected to a first distal flow channel (120) and a second distal flow channel (130), for removing the oxidation reaction product and the reduction reaction product generated by the first and second electrode (140, 150) respectively, from the flow channel reactor (110). The first (120) and second (130) distal flow channel are positioned essentially in line with the flow channel reactor (110). Similar as in FIG. 1 and FIG. 2, the flow channel reactor (110) does not comprise a membrane between the electrodes, but further comprises an elongated perforated divider or a mesh (160) positioned between and parallel to the first and second electrode (140, 150). While the embodiments shown in FIG. 1 and FIG. 2 have an advantageous reduced pressure drop due to the angle between the distal flow channel and the longitudinal axis of the flow channel reactor, the embodiment presented in FIG. 3 has several advantages as well: it represents a more simplified design compared to the embodiments shown in FIG. 1 and FIG. 2. In addition, it takes up a minimal amount of space and is easily stackable side by side, thus making it easy to assemble a plurality of such electrolyzers side by side. It is also simple to manufacture, for instance, only requiring coating the electrodes onto a flat plate. This also promotes maintaining a precise electrode-to-electrode distance.

Another related aspect of the present application provides a method of electrochemically producing at least one product comprising the steps of:
(i) providing an electrolysis reactor comprising a flow channel reactor; a first electrode and a second electrode positioned inside the flow channel reactor, a first distal flow channel and a second distal flow channel directly connected to the outlet of the flow channel reactor, wherein preferably the ratio of the width D of the flow channel reactor to the width d of the first and/or second distal flow channel ranges from 0.5 to 1, and an elongated perforated divider or mesh comprising a plurality of openings, particularly with openings with a size of at least 1 µm, positioned in the flow channel reactor between and parallel to the first and second electrode;
(ii) flowing a stream of a liquid through the flow channel reactor, particularly under laminar flow conditions, in contact with the first and the second electrode;
(iii) applying a voltage across the first and second electrode and/or subjecting the first and second electrode to irradiation by a light source, thereby generating an oxidation reaction product at the first electrode and a reduction reaction product at the second electrode in said stream of liquid, particularly wherein the elongated perforated divider or mesh and the laminar flow confine the oxidation reaction product and the reduction reaction product to opposing sides of the flow channel reactor; and
(iv) allowing the oxidation reaction product to exit from the flow channel reactor via the first distal flow channel and allowing the reduction reaction product to exit from the flow channel reactor via the second distal flow channel.

In particular embodiments, the electrolysis reactor is the membraneless electrolysis reactor and its components as described elsewhere herein.

In certain embodiments, the method further comprises the step of separating the oxidation reaction product and/or the reduction reaction product from a first and/or second effluent stream, particularly by a gas-liquid separator as known in the art, and, optionally, recycling the reaction product depleted first and/or second effluent stream to the flow channel reactor.

In certain embodiments, step (ii) is performed under laminar flow conditions with a Reynolds number lower than 2000, particularly lower than 1500 or lower than 1000. In particular embodiments, step (ii) is performed under laminar flow conditions with a Reynolds number between 1 and 1000 or between 1 and 500. In more particular embodiments, step (ii) is performed under laminar flow conditions with a Reynolds number between 1 and 250, between 1 and 200, or between 1 and 100. Advantageously, the electrolysis reactor according to the present application allows to obtain highly pure reaction products, even at these low laminar flow conditions, and concomitant weak flow field.

In some embodiments, the flow is pulsed. In some embodiments, the voltage is pulsed.

In particular embodiments, the liquid is an electrolyte. In particular embodiments, the liquid is a liquid comprising a reactant. In particular embodiments, the liquid is water or water comprising a salt. For instance, the liquid may be water comprising NaCl, such as seawater or a brine. In particular embodiments, the liquid is an alkaline electrolyte, such as a KOH or NaOH solution, for instance a 15-40 wt% KOH or NaOH solution. In particular embodiments, the liquid is an acidic electrolyte, such as a dilute H₂SO₄ solution. In particular embodiments, the liquid is an aqueous solution comprising an organic molecule. Said organic molecule may be contained in or derived from organic waste or biomass. For instance, the liquid comprises glycerol. In this case, an oxidation product of glycerol, typically a non-gaseous oxidation product of glycerol, is generated at the first electrode (anode) and a hydrogen gas is generated at the second electrode (cathode).

In particular embodiments, such as in case the electrolyte is an aqueous NaCl solution, such as a brine, the oxidation reaction product is a gas, particularly oxygen or chlorine gas and/or the reduction product is a gas, particularly hydrogen gas.

In particular embodiments, the electrolysis reactor is operated at a current density of at least 250 mA/cm².

The present application further relates to the use of an membraneless electrolysis reactor or electrolysis system according to the present applications for the electrolysis of water, as sea water or brine solutions, wherein the water typically contains electrolytes to improve the conductivity, such as KOH, NaOH or dilute sulfuric acid, and/or for performing a photoelectrochemical reaction, and/or for performing other electrochemical reactions, particularly producing gaseous reaction products, such as CO₂ reduction in aqueous electrolytes for the production of methane, carbon monoxide, alkanes, aldehydes, carboxylic acids, alcohols; or the production of chlorine, sodium hydroxide and hydrogen from sodium chloride solutions.

### Examples

### Example 1. Computational Fluid Dynamics Modelling & Dye experiments for flow visualization

The geometry of the membraneless electrolysis reactor was studied by computational fluid dynamics (CFD) by varying the governing parameters, *Re* = *DUρ*/*µ,* θ and D/d, where *U* is the average inlet velocity, *ρ* is the fluid density and *µ* is the viscosity of the fluid. The geometric parameters D, d and θ are flow channel reactor width, distal flow channel width and the angle between distal flow channel and flow channel reactor, respectively. The models were constructed in 2D. The inlet of the flow channel reactor was kept sufficiently long so that the incoming flow field is fully developed. Similarly, the distal flow channels were long enough for the flow to remain uninfluenced by the exit boundary. In the definition of the dimensionless parameter *Re*, the width of the flow channel reactor D was used as the characteristic length. The numerical meshing of the 2D domain was done with triangular and rectangular mesh elements according to the expected velocity gradients. Thus, the mesh was refined close to the walls with rectangular elements to capture the velocity gradients accurately. A mesh independence test was carried out to ensure the numerical accuracy of the solution. For each set of governing parameters, the stationary continuity and momentum equations were solved by an FEM based solver in COMSOL Multiphysics. The velocity fields in terms of the streamlines and magnitude (scaled by the flow channel reactor velocity) were visualized, and the pressure drop scaled by *½ ρU² i.e.* pressure coefficients were obtained considering two points between a fixed distance (20 times D) along the flow. *Re* values of 10, 100 and 500 and a D/d ratio of 0.75, 1 and 2 were considered. Angle θ varied between 105° and 165°.

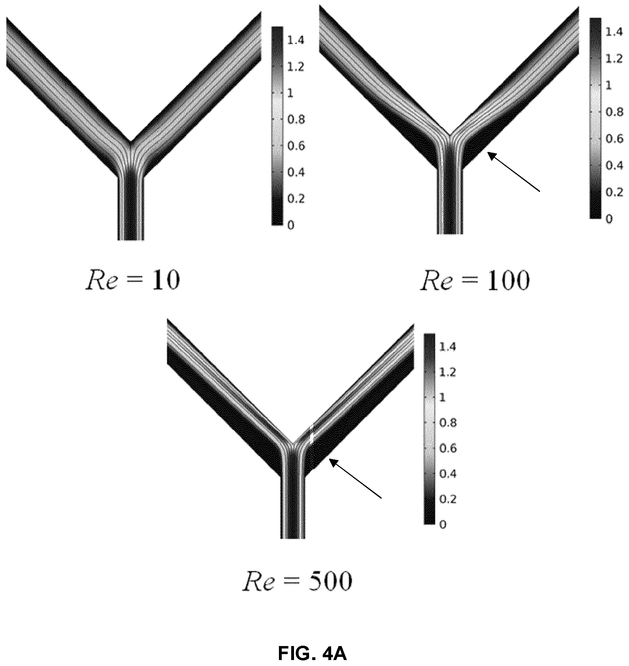

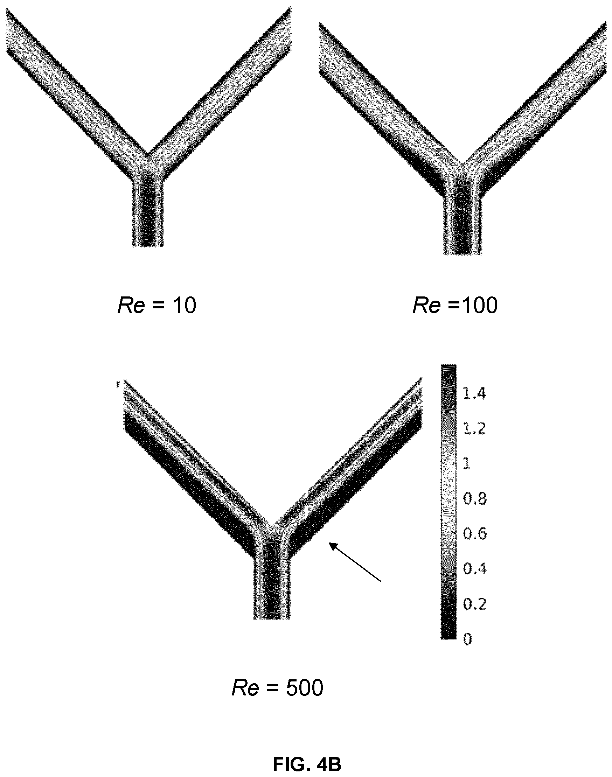

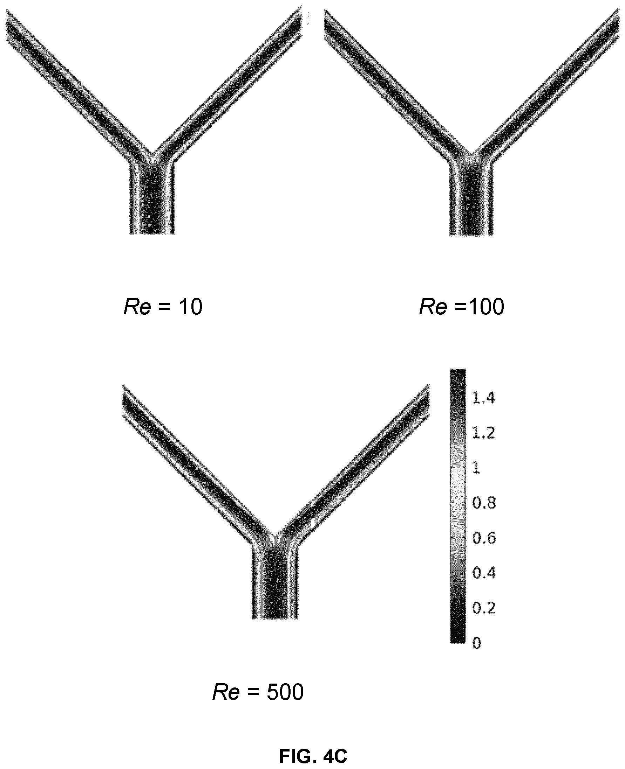

FIG 4A-4C shows the computation fluid dynamics/flow fields in the electrolyser channels with D/d of 0.75 (FIG 4A), 1 (FIG 4B) and 2 (FIG 4C) and Angle θ = 135°, for three different Reynolds numbers. Irrespective of the *Re*, a strong flow field at the center of the flow channel reactor was observed.

The comparison of FIGS 4A-4C indicates that when the distal flow channel width is significantly smaller (e.g. at a D/d ratio of 2) with respect to the flow channel reactor, the strength of the flow field remains unaltered after diversion. On the other hand, when the distal flow channel width is significantly larger than the width of the flow channel reactor (e.g. at a D/d ratio of = 0.75), the strength of the flow field is distributed over two larger channels resulting in a reduction of the flow velocity. Overall, the channel width ratio has strong implications on the bubble separability, particularly at higher current densities and at higher gas production rates. Without wishing to be bound by theory, distal flow channels with a larger cross-sectional area (i.e. having a wider diameter) compared to the flow channel reactor are able to accommodate a larger number of bubbles as well as larger bubbles, thus promoting the separation of the anode and cathode gaseous reaction products. This experiment also demonstrates that, for the wider distal flow channels, there is a low velocity stagnant zone below (indicated with an arrow) the high velocity streamlines, or, stated differently, broader distal flow channels comprise a zone wherein the fluid has a low velocity, particularly at higher *Re* (e.g. at *Re* = 500). This region is important as a buffer zone to accommodate larger bubble plumes.

In addition, a smaller distal flow channel implies a higher resistance to the flow and hence a higher pressure drop, which in its turn requires a higher pumping power and increased power consumption.

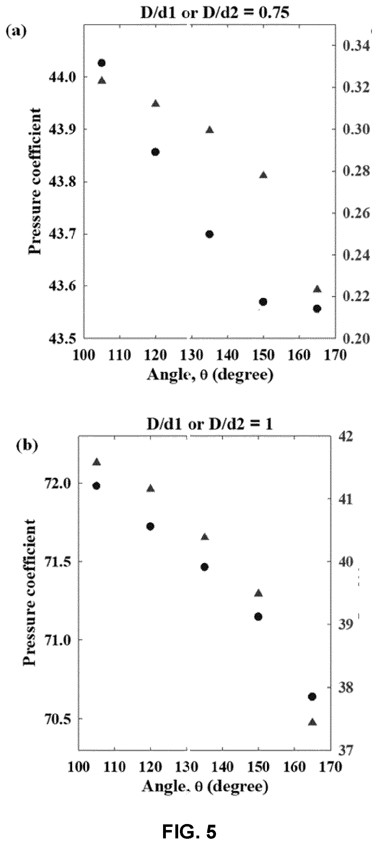

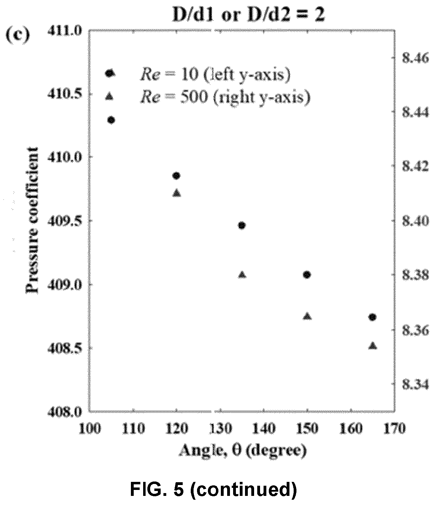

The effect of varying the dimensions of the flow channels and the angle θ on the pressure loss in the system for different *Re* was also studied, and is represented in FIG 5. The ratio D/d impacted the pressure coefficient (indicative of the pressure loss in the system) to a larger extent, with the lowest values for D/d of about 0.75, and the highest for D/d of about 2. In general, the pressure coefficient varied little with angle θ. An angle θ of 135° was chosen as it provides a smooth flow separation at the junction and substantial diversion of the flow without a strong wake formation, as demonstrated by the CFD modelling.

To complement the computation fluid dynamics study, different electrolysis reactors were constructed by stereolithographic 3D printing. The flow fields for the different *Re* were visualized by injecting concentrated red and blue dyes at the opposite walls of the channel (where the electrodes are placed), while a steady flow corresponding to the given *Re* was maintained. In these electrolyte flow experiments the red and blue dyes are used as a model for a hydrogen gas and oxygen gas bubble plume. It was observed that the width of the distal flow channel also influences the rising gas bubble plume. When the distal flow channel width is smaller, the size of the rising gas bubble plume is limited by the higher possibility of cross over and mixing.

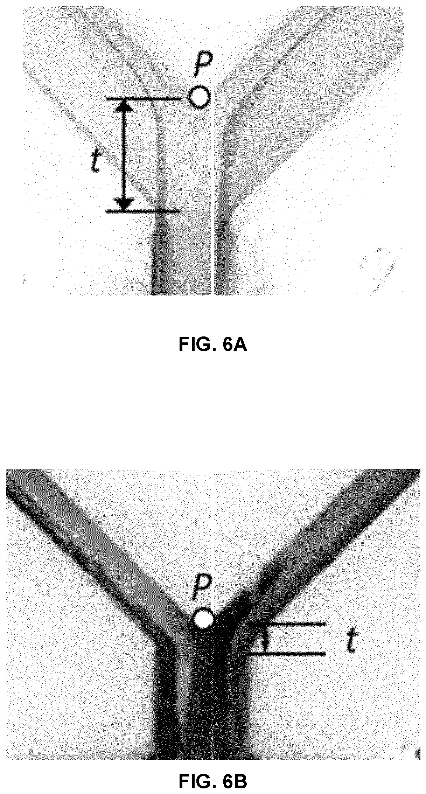

As shown in FIG 6A, when D/d = 0.75 (i.e. the width of the flow channel reactor is significantly smaller than the distal flow channel width), the inlet of the distal flow channel, represented by the distance t, allows the flow to diverge at point P with a safe distance from the central line. This ensures that even if the rising gas bubble plume is large, such as at higher production rates when a large amount of bubbles is generated, the large gap t will facilitate flow induced diversion of the bubbles. In contrast, as shown in FIG 6B when D/d = 2 (i.e. the width of the flow channel reactor is significantly larger than the width of the distal flow channel width), the inlet of the distal flow channel, represented by the distance t, is also smaller, which results in an abrupt diversion of the flow at point P without allowing the two diverging streams to develop. This leads to crowding of bubbles (or dye as demonstrated in experiment) at the junction and cross-over to the other side. In contrast, as shown in FIG 6A, a larger distance t facilitates "bending" of the flow streamlines away from the central line of symmetry. Thus, a larger gas plume resulting from a higher production rate can be kept separate more efficiently when the flow channel reactor width is significantly smaller than the distal flow channel width.

Based on the computational fluid dynamics and the electrolyte experiments, the preferred dimensions of the electrolysis reactor include a ratio of the flow channel reactor width to the distal flow channel width D/d of less than 1, in particular between about 0.5 and about 0.8, and angle θ between 120° and 150°, in particular between 135° and 150°. In addition, the main benefits of the membraneless electrolysis reactor can particularly be obtained with a width of the flow channel reactor, or, stated differently the interelectrode distance, between 2.5 mm and 5.0 mm, and a porous mesh comprising a plurality of openings, positioned between and parallel to the electrodes. The inventors have further observed, independently form the findings above that a mesh pore size of 10 to 100 µm allows for a high separability of the reaction products, without a significant increase in the ohmic resistance through the mesh. More in particular, a flow channel with optimized dimensions was constructed by stereolithographic 3D printing. The main flow channel (of the flow channel reactor) and the distal flow channel widths were fixed as D = 5 mm, and d1 = d2 = 6.667 mm, respectively. To visualize the flow fields for the different *Re*, concentrated red and blue dyes were introduced by injection at the opposite walls of the channel (where the electrodes are placed), while a steady flow corresponding to the given *Re* was maintained. The dye flow patterns for different *Re* matched with the simulations shown in FIG. 4. Due to the Segré-Silberberg effect, the diffusion of the dye is obstructed by the strong flow field at the center, demonstrating a flow-induced product separation in the flow channels.

### Example 2. Hydrogen gas evolution experiments

Based on the fluid dynamical analysis, an electrolysis reactor was constructed with the same dimensions as the channel used for the dye experiments. The width of the channel equals the electrode-to-electrode distance and was 5 mm. The length of the flow channel reactor was 10 cm, and the length and width of the distal flow channels was 8 cm and 6.6 mm, respectively. Platinum Carbon electrodes of 2 cm length and 1 cm width (2 cm² surface area) were fixed on the opposite walls of the flow channel reactor. The electrodes were positioned so that their downstream end is positioned at the outlet of the flow channel reactor, where it bifurcates into the two distal flow channels, as indicated in FIG. 6. The electrodes are then connected to a potentiostat to maintain a potential difference required for the water splitting reactions while a flow is maintained. To introduce a mesh at the center between the electrodes two strategies were adopted. First, an integrated mesh with the pore size of 1*1 mm constructed along with the electrolyser by 3D printing (FIG. 6, center figure). Alternatively, a stainless-steel wire gauze with the pore size of 1*1 mm was introduced between the electrodes for testing (FIG. 6, right).
Electrolysis experiments carried out with the set-up without mesh varying the *Re* from low to high values, showed that, without a mesh, the bubbles generated at one of the electrodes to easily cross over to the opposite distal flow channel, even in the presence of a strong flow field, i.e. at *Re* ~ 1500 (FIG. 6, left).

However, as shown in Figure 3 (center and rightmost), while the flow field prevents particularly the smaller bubbles from passing from an electrode to the opposite distal flow channel by the velocity gradient (Segré-Silberberg effect), the mesh further contributes to the separation by preventing both the small and the larger bubbles from crossing over to the opposite distal flow channel. In particular, even a weak flow regime as demonstrated in the experiments (Re ~ 112) is sufficient to operate the electrolysers with mesh and to obtain negligible H₂/O₂ cross-over, and thus obtain hydrogen gas and oxygen gas with more than 99% purity, as further demonstrated below.

### Example 3. CAD model of the electrolysis reactor components

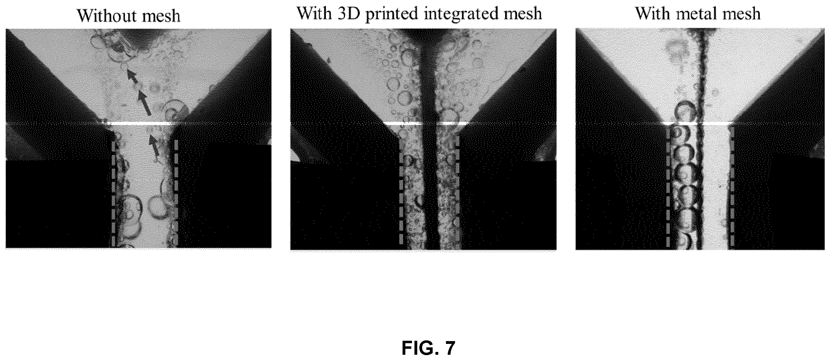

A particular embodiment of an electrolysis reactor expanded the basic set-up used in Example 2. In particular, the improvements are related to the incorporation of a means for light to irradiate the electrodes, which is particularly useful for photoactive electrodes, and the easy insertion/detachment of the electrodes. The CAD model in FIG. 7 resembles the schematical representation of the electrolysis reactor of FIG. 1, Optical quartz windows (180) in parallel to the electrodes (140, 150) on the outer side of the flow channel reactor (110) are introduced. The walls of the flow channel reactor 110) are adapted for easy insertion of the electrodes (140, 150) into the electrolyser so that the electrodes are placed face-to-face along the flow merging with the rest of the channel walls. In particular, the electrodes and the part of the channel wall attached thereto are easily detachable from the electrolyzer. This facilitates production, maintenance and replacement of the electrodes, as it does not require dismantling the entire electrolyzer.

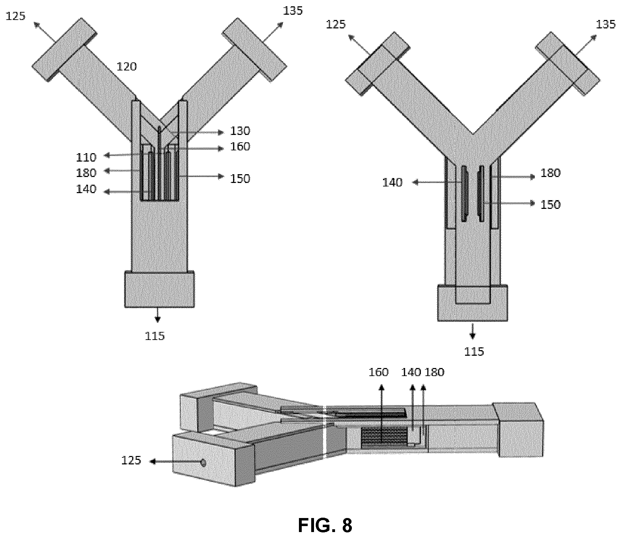

The electrolyte enters the flow channel reactor (110) via flow channel reactor inlet (115). The electrolyte exiting the outlets (125, 135) of the distal flow channels (120, 130) of the electrolyser, carrying the H₂ and O₂ bubbles, respectively, are each passed to a gas-liquid separator. An example of such gas-liquid separator is shown in FIG. 8. The electrolyte carrying either hydrogen or oxygen gas passes through the small inlet which extends to the bottom inside the main chamber of the gas-liquid separator. The gas bubbles can exit through the outlet at the top. One extra outlet is provided for venting in the case of excess pressure or introduction of an inert carrier gas. The electrolyte without gas bubbles exits through the larger outlet that also maintains a liquid level inside the chamber. Optionally, the electrolyte exiting the gas-liquid separator is returned to the electrolysis reactor. Like the membraneless electrolysis reactor, the gas-liquid separator can be 3D printed.

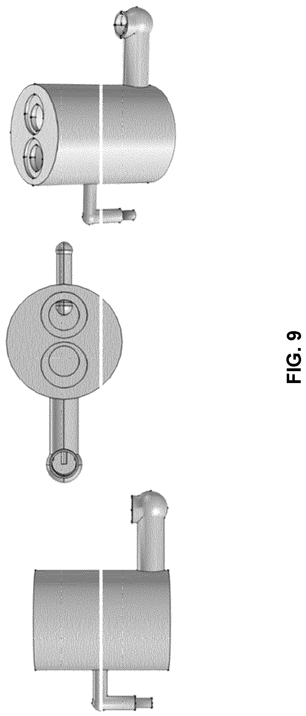

Finally, FIG. 9 shows the CAD model of the inbuilt and integrated 3D printed mesh with the pore size of 1*1 mm placed in between the electrodes.

### Example 4. Electrolysis experiments with online mass spectroscopy

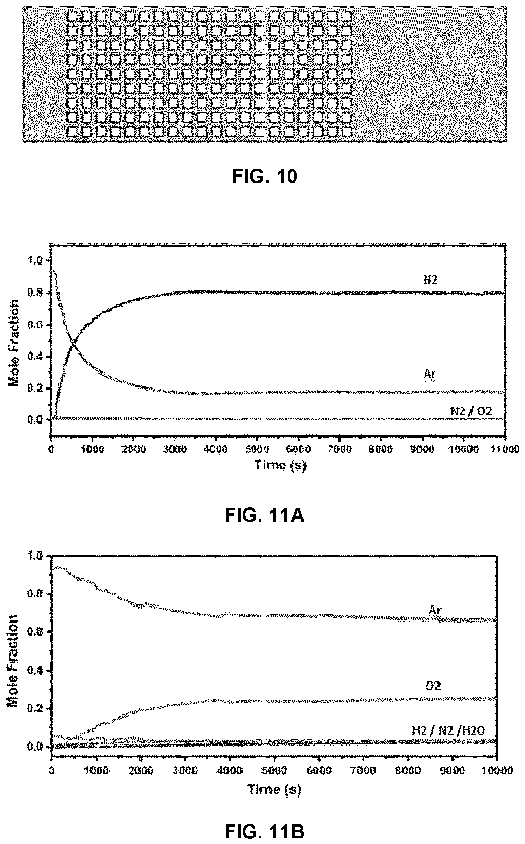

Real time analysis of the gas products obtained during electrolysis were carried out using a benchtop quadruple mass spectrometry from Pfeiffer vacuum with the sensitivity of < 100 PPB. The gaseous products evolving from the two electrodes and sampled at the outlet of each distal flow channel were sent to MS along with highly pure Argon as a carrier gas at the flow rate of 0.26L/min. The electrolysis was carried out for more than 3 hours with at 250 mA/cm² under continuous monitoring. As shown in FIG. 10A and 10B, for an electrolyzer with 3D printed integrated mesh, the H₂ and O₂ gas concentration in each product steam reached a constant value after a certain period and remains constant during the further experiment. As clearly demonstrated in FIG. 10A, negligible traces of O₂ were detected in the H₂ product stream. Similarly, as shown in FIG. 10B, negligible traces of H₂ were detected in the O₂ product stream.

## Claims

1. A membraneless electrolysis reactor (100) comprising
(a) a flow channel reactor (110) comprising an inlet and outlet, wherein a longitudinal axis of the flow channel reactor (110) connects the flow channel reactor inlet and outlet,
(b) a first electrode (140) and a second electrode (150) positioned inside the flow channel reactor (110) and extending longitudinally along opposite sides of the flow channel reactor (110) towards the flow channel reactor outlet;
(c) a first distal flow channel (120) with a first distal flow channel inlet and outlet and a second distal flow channel (130) with a second distal flow channel inlet and outlet, wherein the inlets of the first and second distal flow channel (120, 130) are directly connected to the outlet of the flow channel reactor (110), wherein the ratio of the width D of the flow channel reactor (110) to the width d1 and/or d2 of the first and/or second distal flow channel (120, 130) ranges from 0.5 to 1; and
(d) an elongated divider or mesh (160) comprising a plurality of openings with a size of at least 1 µm located in the flow channel reactor (110), positioned between and parallel to the first and second electrode (140, 150).

2. The membraneless reactor (100) according to claim 1 wherein the plurality of openings have a size between 1 µm and 3000µm.

3. The membraneless reactor (100) according to claim 2 wherein the plurality of openings have a size between 10 µm and 100 µm.

4. The membraneless reactor (100) according to any one of claims 1 to 3 wherein the ratio of the width D of the flow channel reactor (110) to the width d1 and/or d2 of the first and/or second distal flow channel (120, 130) ranges from 0.5 to 0.8.

5. The membraneless reactor (100) according to any one of claims 1 to 4, wherein the first and second distal flow channels (120, 130) each extend from said flow channel reactor outlet in different directions at an angle θ to the longitudinal axis of the flow channel reactor (110), wherein the angle θ ranges from 90° to 175°.

6. The membraneless reactor (100) according to claim 5, wherein the angle θ ranges 120° to 150°.

7. The membraneless reactor (100) according to any one of claims 1 to 6 wherein the width D of the flow channel reactor (110) ranges between 1 mm and 100 mm or between 2 mm and 50 mm.

8. The membraneless reactor (100) according to claim 7 wherein the width D ranges between 2 mm and 8 mm, particularly between 2.5 mm and 5 mm.

9. The membraneless reactor (100) according to any one of claims 1 to 8, wherein the first and second distal flow channel (120, 130) are connected to the flow channel reactor (110) by way of a common distal flow channel inlet, and wherein the elongated divider or mesh (160) extends into the common distal flow channel inlet or wherein the elongated divider or mesh (160) is connected to a non-perforated divider (170) which extends into the common distal flow channel inlet.

10. The membraneless reactor (100) according to any one of claims 1 to 9, wherein at least one electrode (140, 150) includes a catalyst.

11. The membraneless reactor (100) according to any one of claims 1 to 10, further comprising one or more proximate flow channels (210, 220) connected to the inlet of the flow channel reactor (110).

12. The membraneless reactor (100) according to any one of claims 1 to 11 wherein the flow channel reactor (110) comprises a side wall with a transparent and/or an opaque portion (180), configured for allowing a light source to illuminate the first and/or the second electrode (140, 150).

13. An electrolysis system comprising at least one membraneless reactor (100) according to any one of claims 1 to 12 and further comprising a first product collector connected to the outlet of the first distal flow channel (120) and/or a second product collector connected to the outlet of the second distal flow channel (130), particularly wherein the first and/or second product collector comprises a gas-liquid separator.

14. The system according to claim 13, comprising a plurality of the membraneless reactor (100) according to any one of claims 1 to 12.

15. A method of electrochemically producing at least one product comprising the steps of:
(i) providing a membraneless electrolysis reactor comprising a flow channel reactor (110); a first electrode (140) and a second electrode (150) positioned inside the flow channel reactor (110) and extending longitudinally along opposite sides of the flow channel reactor (110), a first distal flow channel (120) and a second distal flow channel (130) directly connected to the outlet of the flow channel reactor (110), wherein the ratio of the width D of the flow channel reactor (110) to the width d1 and/or d2 of the first and/or second distal flow channel (120, 130) ranges from 0.5 to 1, and an elongated divider or mesh (160) comprising a plurality of openings with size of at least 1 µm, positioned in the flow channel reactor (110) between and parallel to the first and second electrode (140, 150);
(ii) flowing a stream of a liquid, particularly an electrolyte or a liquid comprising a reactant, through the flow channel reactor (110), under laminar flow conditions, in contact with the first and the second electrode (140, 150);
(iii) applying a voltage across the first and second electrode (140, 150) and/or applying irradiation to the first and second electrode (140, 150), thereby generating an oxidation reaction product at the first electrode and a reduction reaction product at the second electrode, particularly wherein the porous divider or mesh (160) and the laminar flow confine the oxidation reaction product and the reduction reaction product to opposing sides of the flow channel reactor (110); and
(iv) removing the oxidation reaction product from the flow channel reactor (110) via the first distal flow channel (120) and removing the reduction reaction product from the flow channel reactor (110) via the second outlet (130).

16. The method according to claim 15, wherein the oxidation reaction product is a gas, particularly oxygen or chlorine gas and/or wherein the reduction product is a gas, particularly hydrogen gas.

17. The method according to claim 15 or 16, further comprising the step of separating the oxidation reaction product and/or the reduction reaction product from the liquid, and, optionally, recycling the liquid to the flow channel reactor (110).

18. Use of the membraneless electrolysis reactor according to any one of claims 1 to 12 or the system according to claim 13 or 14 for the electrolysis of water, particularly water containing electrolytes, sea water or brine solutions, or for performing a photoelectrochemical reaction.

## Patentansprüche

1. Membranloser Elektrolysereaktor (100), umfassend:
(a) einen Strömungskanalreaktor (110), der einen Einlass und einen Auslass umfasst, wobei eine Längsachse des Strömungskanalreaktors (110) den Strömungskanalreaktoreinlass und -auslass verbindet,
(b) eine erste Elektrode (140) und eine zweite Elektrode (150), die im Inneren des Strömungskanalreaktors (110) angeordnet sind und sich längs entlang gegenüberliegender Seiten des Strömungskanalreaktors (110) hin zu dem Strömungskanalreaktorauslass erstrecken;
(c) einen ersten distalen Strömungskanal (120) mit einem Einlass und einem Auslass des ersten distalen Strömungskanals und einen zweiten distalen Strömungskanal (130) mit einem Einlass und einem Auslass des zweiten distalen Strömungskanals, wobei die Einlässe des ersten und zweiten distalen Strömungskanals (120, 130) unmittelbar mit dem Auslass des Strömungskanalreaktors (110) verbunden sind, wobei das Verhältnis der Breite D des Strömungskanalreaktors (110) zur Breite d1 und/oder d2 des ersten und/oder zweiten distalen Strömungskanals (120, 130) im Bereich von 0,5 bis 1 liegt; und
(d) ein(e) lang gestreckte(s) Abtrennung oder Gitter (160), die/das eine Mehrzahl von Öffnungen mit einer Größe von wenigstens 1 µm umfasst und die/das sich in dem Strömungskanalreaktor (110) befindet undzwischen und parallel zu der ersten und zweiten Elektrode (140, 150) angeordnet ist.

2. Membranloser Reaktor (100) nach Anspruch 1, wobei die Mehrzahl von Öffnungen eine Größe zwischen 1 µm und 3000 µm aufweist.

3. Membranloser Reaktor (100) nach Anspruch 2, wobei die Mehrzahl von Öffnungen eine Größe zwischen 10 µm und 100 µm aufweist.

4. Membranloser Reaktor (100) nach einem der Ansprüche 1 bis 3, wobei das Verhältnis der Breite D des Strömungskanalreaktors (110) zur Breite d1 und/oder d2 des ersten und/oder zweiten distalen Strömungskanals (120, 130) im Bereich von 0,5 bis 0,8 liegt.

5. Membranloser Reaktor (100) nach einem der Ansprüche 1 bis 4, wobei der erste und zweite distale Strömungskanal (120, 130) sich jeweils von dem Strömungskanalreaktorauslass in unterschiedlichen Richtungen mit einem Winkel θ zur Längsachse des Strömungskanalreaktors (110) erstrecken, wobei der Winkel θ im Bereich von 90° bis 175° liegt.

6. Membranloser Reaktor (100) nach Anspruch 5, wobei der Winkel θ im Bereich von 120° bis 150° liegt.

7. Membranloser Reaktor (100) nach einem der Ansprüche 1 bis 6, wobei die Breite D des Strömungskanalreaktors (110) im Bereich zwischen 1 mm und 100 mm oder zwischen 2 mm und 50 mm liegt.

8. Membranloser Reaktor (100) nach Anspruch 7, wobei die Breite D im Bereich zwischen 2 mm und 8 mm, insbesondere zwischen 2,5 mm und 5 mm, liegt.

9. Membranloser Reaktor (100) nach einem der Ansprüche 1 bis 8, wobei der erste und zweite distale Strömungskanal (120, 130) mit dem Strömungskanalreaktor (110) über einen gemeinsamen Einlass der distalen Strömungskanäle verbunden sind und wobei die/das lang gestreckte Abtrennung oder Gitter (160) sich in den gemeinsamen Einlass der distalen Strömungskanäle hinein erstreckt oder wobei die/das lang gestreckte Abtrennung oder Gitter (160) mit einer nicht perforierten Abtrennung (170) verbunden ist, die sich in den gemeinsamen Einlass der distalen Strömungskanäle hinein erstreckt.

10. Membranloser Reaktor (100) nach einem der Ansprüche 1 bis 9, wobei wenigstens eine Elektrode (140, 150) einen Katalysator umfasst.

11. Membranloser Reaktor (100) nach einem der Ansprüche 1 bis 10, der ferner einen oder mehrere proximale Strömungskanäle (210, 220) umfasst, die mit dem Einlass des Strömungskanalreaktors (110) verbunden sind.

12. Membranloser Reaktor (100) nach einem der Ansprüche 1 bis 11, wobei der Strömungskanalreaktor (110) eine Seitenwand mit einem transparenten und/oder einem opaken Abschnitt (180) umfasst, die dazu ausgestaltet ist zu erlauben, dass eine Lichtquelle die erste und/oder die zweite Elektrode (140, 150) beleuchtet.

13. Elektrolysesystem, das wenigstens einen membranlosen Reaktor (100) nach einem der Ansprüche 1 bis 12 umfasst und ferner eine erste Produktsammeleinrichtung, die mit dem Auslass des ersten distalen Strömungskanals (120) verbunden ist, und/oder eine zweite Produktsammeleinrichtung, die mit dem Auslass des zweiten distalen Strömungskanals (130) verbunden ist, umfasst, wobei insbesondere die erste und/oder zweite Produktsammeleinrichtung eine Gas-Flüssigkeits-Trenneinrichtung umfasst.

14. System nach Anspruch 13, das eine Mehrzahl des membranlosen Reaktors (100) nach einem der Ansprüche 1 bis 12 umfasst.

15. Verfahren zur elektrochemischen Herstellung wenigstens eines Produkts, folgende Schritte umfassend:
(i) Bereitstellen eines membranlosen Elektrolysereaktors, umfassend einen Strömungskanalreaktor (110); eine erste Elektrode (140) und eine zweite Elektrode (150), die im Inneren des Strömungskanalreaktors (110) angeordnet sind und sich längs entlang gegenüberliegender Seiten des Strömungskanalreaktors (110) erstrecken, einen ersten distalen Strömungskanal (120) und einen zweiten distalen Strömungskanal (130), die unmittelbar mit dem Auslass des Strömungskanalreaktors (110) verbunden sind, wobei das Verhältnis der Breite D des Strömungskanalreaktors (110) zur Breite d1 und/oder d2 des ersten und/oder zweiten distalen Strömungskanals (120, 130) im Bereich von 0,5 bis 1 liegt, und ein(e) lang gestreckte(s) Abtrennung oder Gitter (160), die/das eine Mehrzahl von Öffnungen mit einer Größe von wenigstens 1 µm umfasst und die/das sich in dem Strömungskanalreaktor (110) befindet und zwischen und parallel zu der ersten und zweiten Elektrode (140, 150) angeordnet ist;
(ii) Leiten eines Stroms einer Flüssigkeit, insbesondere eines Elektrolyten oder einer Flüssigkeit, die einen Reaktanten umfasst, durch den Strömungskanalreaktor (110) unter laminaren Strömungsbedingungen in Kontakt mit der ersten und der zweiten Elektrode (140, 150);
(iii) Anlegen einer Spannung über die erste und zweite Elektrode (140, 150) hinweg und/oder Vornehmen einer Bestrahlung der ersten und zweiten Elektrode (140, 150) und dadurch Erzeugen eines Oxidationsreaktionsprodukts an der ersten Elektrode und eines Reduktionsreaktionsprodukts an der zweiten Elektrode, wobei insbesondere die/das poröse Abtrennung oder Netz (160) und die laminare Strömung das Oxidationsreaktionsprodukt und das Reduktionsreaktionsprodukt auf gegenüberliegende Seiten des Strömungskanalreaktors (110) beschränkt halten; und
(iv) Entnehmen des Oxidationsreaktionsprodukts aus dem Strömungskanalreaktor (110) über den ersten distalen Strömungskanal (120) und Entnehmen des Reduktionsreaktionsprodukts aus dem Strömungskanalreaktor (110) über den zweiten Auslass (130).

16. Verfahren nach Anspruch 15, wobei das Oxidationsreaktionsprodukt ein Gas, insbesondere Sauerstoff- oder Chlorgas, ist und/oder wobei das Reduktionsprodukt ein Gas, insbesondere Wasserstoffgas, ist.

17. Verfahren nach Anspruch 15 oder 16, das ferner den Schritt des Trennens des Oxidationsreaktionsprodukts und/oder des Reduktionsreaktionsprodukts von der Flüssigkeit und, optional, des Rückführens der Flüssigkeit in den Strömungskanalreaktor (110) umfasst.

18. Verwendung des membranlosen Elektrolysereaktors nach einem der Ansprüche 1 bis 12 oder des Systems nach Anspruch 13 oder 14 für die Elektrolyse von Wasser, insbesondere Wasser, das Elektrolyte enthält, Meerwasser oder Salzlösungen, oder zum Durchführen einer photoelektrochemischen Reaktion.

## Revendications

1. Réacteur d'électrolyse sans membrane (100) comprenant
(a) un réacteur à canal d'écoulement (110) comprenant une entrée et une sortie, un axe longitudinal du réacteur à canal d'écoulement (110) reliant l'entrée et la sortie du réacteur à canal d'écoulement,
(b) une première électrode (140) et une seconde électrode (150) positionnées à l'intérieur du réacteur à canal d'écoulement (110) et s'étendant longitudinalement le long de côtés opposés du réacteur à canal d'écoulement (110) en direction de la sortie du réacteur à canal d'écoulement ;
(c) un premier canal d'écoulement distal (120) avec une entrée et une sortie de premier canal d'écoulement distal et un second canal d'écoulement distal (130) avec une entrée et une sortie de second canal d'écoulement distal, les entrées des premier et second canaux d'écoulement distaux (120, 130) étant directement reliées à la sortie du réacteur à canal d'écoulement (110), le rapport de la largeur D du réacteur à canal d'écoulement (110) sur la largeur d1 et/ou d2 du premier et/ou second canal d'écoulement distal (120, 130) étant compris entre 0,5 et 1 ; et
(d) un diviseur ou treillis allongé (160) comprenant une pluralité d'ouvertures ayant une taille d'au moins 1 µm, situé dans le réacteur à canal d'écoulement (110), positionné entre la première et la seconde électrode (140, 150) et parallèlement à celles-ci.

2. Réacteur sans membrane (100) selon la revendication 1, la pluralité d'ouvertures ayant une taille comprise entre 1 µm et 3000 µm.

3. Réacteur sans membrane (100) selon la revendication 2, la pluralité d'ouvertures ayant une taille comprise entre 10 µm et 100 µm.

4. Réacteur sans membrane (100) selon l'une quelconque des revendications 1 à 3, le rapport de la largeur D du réacteur à canal d'écoulement (110) à la largeur d1 et/ou d2 du premier et/ou du second canal d'écoulement distal (120, 130) étant compris entre 0,5 et 0,8.

5. Réacteur sans membrane (100) selon l'une quelconque des revendications 1 à 4, les premier et second canaux d'écoulement distaux (120, 130) s'étendant chacun depuis ladite sortie de réacteur à canal d'écoulement dans des directions différentes selon un angle θ par rapport à l'axe longitudinal du réacteur à canal d'écoulement (110), l'angle θ étant compris entre 90° et 175°.

6. Réacteur sans membrane (100) selon la revendication 5, l'angle θ étant compris entre 120° et 150°.

7. Réacteur sans membrane (100) selon l'une quelconque des revendications 1 à 6, la largeur D du réacteur à canal d'écoulement (110) étant comprise entre 1 mm et 100 mm ou entre 2 mm et 50 mm.

8. Réacteur sans membrane (100) selon la revendication 7, la largeur D étant comprise entre 2 mm et 8 mm, en particulier entre 2,5 mm et 5 mm.

9. Réacteur sans membrane (100) selon l'une quelconque des revendications 1 à 8, les premier et second canaux d'écoulement distaux (120, 130) étant reliés au réacteur à canal d'écoulement (110) via une entrée de canal d'écoulement distal commune, et le diviseur ou treillis allongé (160) s'étendant dans l'entrée de canal d'écoulement distal commune ou le diviseur ou treillis allongé (160) étant relié à un diviseur non perforé (170) qui s'étend dans l'entrée de canal d'écoulement distal commune.

10. Réacteur sans membrane (100) selon l'une quelconque des revendications 1 à 9, au moins une électrode (140, 150) comprenant un catalyseur.

11. Réacteur sans membrane (100) selon l'une quelconque des revendications 1 à 10, comprenant en outre un ou plusieurs canaux d'écoulement proximaux (210, 220) reliés à l'entrée du réacteur à canal d'écoulement (110).

12. Réacteur sans membrane (100) selon l'une quelconque des revendications 1 à 11, le réacteur à canal d'écoulement (110) comprenant une paroi latérale avec une partie transparente et/ou opaque (180), configurée pour permettre à une source de lumière d'éclairer la première et/ou la seconde électrode (140, 150).

13. Système d'électrolyse comprenant au moins un réacteur sans membrane (100) selon l'une quelconque des revendications 1 à 12 et comprenant en outre un premier collecteur de produit relié à la sortie du premier canal d'écoulement distal (120) et/ou un second collecteur de produit relié à la sortie du second canal d'écoulement distal (130), en particulier le premier et/ou le second collecteur de produit comprenant un séparateur gaz-liquide.

14. Système selon la revendication 13, comprenant une pluralité du réacteur sans membrane (100) selon l'une quelconque des revendications 1 à 12.

15. Procédé de production électrochimique d'au moins un produit, comprenant les étapes de :
(i) la fourniture d'un réacteur d'électrolyse sans membrane comprenant un réacteur à canal d'écoulement (110) ; une première électrode (140) et une seconde électrode (150) positionnées à l'intérieur du réacteur à canal d'écoulement (110) et s'étendant longitudinalement le long de côtés opposés du réacteur à canal d'écoulement (110), un premier canal d'écoulement distal (120) et un second canal d'écoulement distal (130) directement reliés à la sortie du réacteur à canal d'écoulement (110), le rapport de la largeur D du réacteur à canal d'écoulement (110) sur la largeur d1 et/ou d2 du premier et/ou second canal d'écoulement distal (120, 130) étant compris entre 0,5 et 1, et un diviseur ou treillis allongé (160) comprenant une pluralité d'ouvertures ayant une taille d'au moins 1 µm, positionné dans le réacteur à canal d'écoulement (110) entre la première et la seconde électrode (140, 150) et parallèlement à celles-ci ;
(ii) l'écoulement d'un courant de liquide, en particulier un électrolyte ou un liquide comprenant un réactif, à travers le réacteur à canal d'écoulement (110), dans des conditions d'écoulement laminaire, en contact avec la première et la seconde électrode (140, 150) ;
(iii) l'application d'une tension aux bornes des première et seconde électrodes (140, 150) et/ou l'application d'une irradiation aux première et seconde électrodes (140, 150), générant ainsi un produit de réaction d'oxydation au niveau de la première électrode et un produit de réaction de réduction au niveau de la seconde électrode, en particulier le diviseur ou treillis poreux (160) et l'écoulement laminaire confinant le produit de réaction d'oxydation et le produit de réaction de réduction sur des côtés opposés du réacteur à canal d'écoulement (110) ; et
(iv) le retrait du produit de réaction d'oxydation hors du réacteur à canal d'écoulement (110) par l'intermédiaire du premier canal d'écoulement distal (120) et le retrait du produit de réaction de réduction hors du réacteur à canal d'écoulement (110) par l'intermédiaire de la seconde sortie (130).

16. Procédé selon la revendication 15, le produit de réaction d'oxydation étant un gaz, en particulier de l'oxygène ou du chlore gazeux et/ou le produit de réduction étant un gaz, en particulier de l'hydrogène gazeux.

17. Procédé selon la revendication 15 ou 16, comprenant en outre l'étape de séparation du produit de réaction d'oxydation et/ou du produit de réaction de réduction du liquide, et, en option, de recyclage du liquide vers le réacteur à canal d'écoulement (110).

18. Utilisation du réacteur d'électrolyse sans membrane selon l'une quelconque des revendications 1 à 12 ou du système selon la revendication 13 ou 14 pour l'électrolyse de l'eau, en particulier de l'eau contenant des électrolytes, de l'eau de mer ou des solutions de saumure, ou pour la réalisation d'une réaction photoélectrochimique.
